# EUROPEAN PATENT APPLICATION

(11) **EP 4 836 281 A1**
(43) Date of publication of application: **04.11.2026**
(21) Application number: 24828311.1
(22) Date of filing: 20.03.2024
(51) Int. Cl.: H02M 7/537, H02M 7/797, H02J 3/38, H02H 9/02

(54) **CONTROL METHOD, INVERTER AND PHOTOVOLTAIC SYSTEM**

(30) Priority: 26.12.2023 CN 202311819349
(71) Applicant: Sungrow Power Supply Co., Ltd., Hefei, Anhui 230088 (CN)
(72) Inventor: CHEN, Qiaodi, Hefei, Anhui 230088 (CN); WANG, Zichen, Hefei, Anhui 230088 (CN); WANG, Hao, Hefei, Anhui 230088 (CN); ZHUANG, Jiacai, Hefei, Anhui 230088 (CN)
(74) Representative: DREISS Patentanwälte PartG mbB
(86) International application number: PCT/CN2024/082772
(87) International publication number: WO 2025/138454

(57) **Abstract**

The present disclosure discloses a control method. The method includes: (01) acquiring target operation state information of an output circuit of a transformer to determine an operation state of a power grid based on the target operation state information; and (02) controlling a switching transistor in the output circuit and an input circuit of the transformer to reduce the target current in response to determining that the power grid is in a predetermined operation state.

## Description

### CROSS-REFERENCE TO RELATED APPLICATION

This application claims priority to and benefits of Chinese Patent Application No. 2023118193493, filed with China National Intellectual Property Administration on December 26, 2023, the entire contents of which are incorporated herein by reference.

### FIELD

The present disclosure relates to the field of control, and more particularly, to a control method, an inverter, and a photovoltaic system.

### BACKGROUND

During an operation of a photovoltaic system, a voltage of a power grid may drop from a rated value to a lower voltage or even zero due to unexpected factors such as a lightning strike. However, in a process of increasing a voltage of the power grid from the lower voltage to the rated value, an inductor current of an inverter also increases, resulting in electronic elements in the inverter being damaged due to an excessive inductor current.

### SUMMARY

The present disclosure aims at solving at least one of the technical problems existing in the related art. To this end, the present disclosure provides a control method, an inverter, and a photovoltaic system.

The embodiments of the present disclosure provide a control method for an inverter. The inverter includes a transformer, an input circuit, and an output circuit. Each of the input circuit and the output circuit includes a switching transistor. The transformer is able to output a target current inputted by a photovoltaic power generation device through the input circuit to a power grid through the output circuit. The method includes: acquiring target operation state information of the output circuit to determine an operation state of the power grid; and controlling the switching transistor to reduce the target current when the power grid is in a predetermined operation state. A peak voltage of the power grid is in an upward trend when the power grid is in the predetermined operation state.

In the control method of the embodiments of the present disclosure, the inverter can acquire the target operation state information of the output circuit of the transformer, to determine the operation state of the power grid based on the target operation state information. In response to determining that the power grid is in the predetermined operation state, the switching transistors in the output circuit and the input circuit of the transformer are controlled to reduce the target current.

In this way, the inverter according to the embodiments of the present disclosure can control the switching transistors in the input circuit and the output circuit to reduce the target current of the transformer when the power grid is in the predetermined operation state. For example, in a process that a voltage of the power grid increases from a lower voltage to a rated value, the inverter can control the switching transistors in the input circuit and the output circuit to reduce the target current of the transformer, to ensure a stable operation of the inverter and the photovoltaic system to a certain extent. According to the embodiments of the present disclosure, the operation state of the power grid can be determined based on the acquired target operation state information, allowing the switching transistor to be adjusted at an appropriate timing, and a reliable control of the switching transistor to be guaranteed.

In some embodiments of the present disclosure, the controlling the switching transistor to reduce the target current when the power grid is in the predetermined operation state includes: acquiring a present current value of the target current when the power grid is in the predetermined operation state; and controlling the switching transistor to reduce the target current when the present current value is greater than a predetermined current value. The predetermined current value includes a minimum value of the target current when the power grid is in the predetermined operation state.

In this way, the inverter according to the embodiments of the present disclosure can acquire the present current value of the target current when the power grid is in the predetermined operation state, and control the switching transistor when the present current value of the target current is greater than the predetermined current value, allowing the switching transistor to be controlled at a reasonable timing to a certain extent.

In some embodiments of the present disclosure, the target current includes a present primary-side inductor current of the transformer, and the predetermined current value includes a first current threshold. The first current threshold includes a minimum primary-side inductor current of the transformer when the power grid is in the predetermined operation state. The controlling the switching transistor to reduce the target current when the present current value is greater than the predetermined current value includes: controlling the switching transistor to reduce the target current when the present primary-side inductor current is greater than the first current threshold.

In this way, the inverter according to the embodiments of the present disclosure can acquire the present primary-side inductor current when the power grid is in the predetermined operation state, and control the switching transistor when the present primary-side inductor current is greater than the first current threshold, allowing the switching transistor to be controlled at a reasonable timing to a certain extent.

In some embodiments of the present disclosure, the target current includes a present secondary-side inductor current of the transformer, and the predetermined current value includes a second current threshold. The second current threshold includes a minimum secondary-side inductor current of the transformer when the power grid is in the predetermined operation state. The controlling the switching transistor to reduce the target current when the present current value is greater than the predetermined current value includes: controlling the switching transistor to reduce the target current when the present secondary-side inductor current is greater than the second current threshold.

In this way, the inverter according to the embodiments of the present disclosure can acquire the present secondary-side inductor current when the power grid is in the predetermined operation state, and control the switching transistor when the present secondary-side inductor current is greater than the second current threshold, allowing the switching transistor to be controlled at a reasonable timing to a certain extent.

In some embodiments of the present disclosure, the controlling the switching transistor to reduce the target current when the present current value is greater than the predetermined current value includes: controlling the switching transistor to switch to an off state to reduce the target current when the present current value is greater than the predetermined current value.

In this way, the inverter according to the embodiments of the present disclosure can control the switching transistors in the input circuit and the output circuit to switch to the off state when the present current value of the target current is greater than the predetermined current value, to make the inverter itself block the current, thereby reducing the target current.

In some embodiments of the present disclosure, the switching transistor is configurable to generate a phase-shifted modulation signal. The controlling the switching transistor to reduce the target current when the power grid is in the predetermined operation state includes: controlling the switching transistor to switch to an on state when a duration of the switching transistor in the off state satisfies a predetermined duration, and controlling, based on output end information, the phase-shifted modulation signal generated by the switching transistor to reduce the target current.

In this way, the inverter according to the embodiments of the present disclosure can control the switching transistor to switch to the on state when the duration of the switching transistor in the on state satisfies the predetermined duration, and then perform phase-shifted modulation through the switching transistor in the on state to generate the phase-shifted modulation signal. Therefore, the target current can be reduced based on the phase-shifted modulation signal, thereby ensuring that the inverter is not disconnected from the power grid when the power grid is in the predetermined state, and the robustness of the inverter is guaranteed.

In some embodiments of the present disclosure, the acquiring the present current value of the target current when the power grid is in the predetermined operation state includes: acquiring the present current value of the target current when the power grid is in the predetermined operation state and the switching transistor is in the on state.

In this way, the inverter according to the embodiments of the present disclosure can acquire the present current value of the target current when the power grid is in the predetermined operation state and the switching transistor is in the on state. Therefore, whether the switching transistor can be switched to the off state can be determined, a possibility that overcurrent protection is triggered or even damage due to an excessive target current when the switching transistor is in the on state is reduced to a certain extent, and a safe operation of the switching transistor is guaranteed.

In some embodiments of the present disclosure, the controlling the switching transistor to reduce the target current when the power grid is in the predetermined operation state includes: increasing a switching frequency of the switching transistor to reduce the target current when the power grid is in the predetermined operation state. The switching frequency and the target current have a negative correlation.

In this way, in the embodiments of the present disclosure, the target current can be reduced by increasing the switching frequency, allowing the target current to be reliably reduced.

In some embodiments of the present disclosure, the controlling the switching transistor to reduce the target current when the power grid is in the predetermined operation state includes: controlling the switching transistor to switch to an off state to reduce the target current when the power grid is in the predetermined operation state.

In this way, the inverter according to the embodiments of the present disclosure can control the switching transistor to switch to the off state when the power grid is in the predetermined operation state, allowing the target current to be reliably reduced.

In some embodiments of the present disclosure, the target operation state information includes a target voltage of the output circuit. The method further includes: determining that the power grid is in the predetermined operation state when a present voltage value of the target voltage is smaller than a predetermined voltage value and the target voltage is in an upward trend within a predetermined duration. The predetermined voltage value includes a lowest value of the target voltage when the power grid is in the predetermined operation state.

In this way, according to the embodiments of the present disclosure, the operation state of the power grid can be determined based on the target voltage and the predetermined voltage value, allowing reliable determination of the predetermined operation state of the power grid to be guaranteed to a certain extent.

The embodiments of the present disclosure provide an inverter including a memory and a processor. The memory has a computer program stored thereon. The processor, when executing the computer program, implements the control method described above.

The embodiments of the present disclosure provide a photovoltaic system including the inverter described above.

The embodiments of the present disclosure further provide a computer-readable storage medium having a computer program stored thereon. One or more processors, when executing the computer program, implement the control method described above.

The inverter, the photovoltaic system, and the computer-readable storage medium according to the embodiments of the present disclosure can control the switching transistors in the input circuit and output circuit to reduce the target current of the transformer when the power grid is in the predetermined operation state. For example, in the process that the voltage of the power grid increases from the lower voltage to the rated value, the inverter can control the switching transistors in the input circuit and the output circuit to reduce the target current of the transformer, to ensure the stable operation of the inverter and the photovoltaic system to a certain extent. According to the embodiments of the present disclosure, the operation state of the power grid can be determined based on the acquired target operation state information, allowing the switching transistor to be adjusted at an appropriate timing, and the reliable control of the switching transistor to be guaranteed.

Additional aspects and advantages of the present disclosure will be given at least in part in the following description, or become apparent at least in part from the following description, or can be learned from practicing of the present disclosure.

### BRIEF DESCRIPTION OF THE DRAWINGS

The above and/or additional aspects and advantages of the present disclosure will be apparent and readily appreciated from descriptions of embodiments taken in conjunction with the following drawings.
FIG. 1 is a flowchart of a control method according to some embodiments of the present disclosure.
FIG. 2 is a schematic diagram of an application scenario according to some embodiments of the present disclosure.
FIG. 3 is a schematic diagram of an application scenario according to some embodiments of the present disclosure.
FIG. 4 is a schematic diagram of an application scenario according to some embodiments of the present disclosure.
FIG. 5 is a schematic diagram of an application scenario according to some embodiments of the present disclosure.
FIG. 6 is a schematic diagram of an application scenario according to some embodiments of the present disclosure.
FIG. 7 is a schematic diagram of an application scenario according to some embodiments of the present disclosure.
FIG. 8 is a flowchart of a control method according to some embodiments of the present disclosure.
FIG. 9 is a flowchart of a control method according to some embodiments of the present disclosure.
FIG. 10 is a schematic diagram of an application scenario according to some embodiments of the present disclosure.
FIG. 11 is a flowchart of a control method according to some embodiments of the present disclosure.
FIG. 12 is a flowchart of a control method according to some embodiments of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

A photovoltaic system refers to a power generation system that converts solar radiation energy into electrical energy. Solar radiation energy has the advantages of clean, safe, and renewable. Therefore, a power generation process of the photovoltaic system causes smaller pollution to the environment and has a weak impact on the surrounding ecology.

Further, according to a relationship between the photovoltaic system and a power system, the photovoltaic system can be divided into an independent photovoltaic system and a grid-connected photovoltaic system. In the grid-connected photovoltaic system, after a photovoltaic module (or a photovoltaic array) generates a direct current (DC) based on solar radiation energy, the inverter can convert the aforesaid DC into an alternating current (AC) with a phase frequency consistent with that of a voltage of a power grid through an transformer in the inverter, and transmit the AC to the power grid, to complete conversion and incorporation of the solar radiation energy into the electric energy of the power grid.

It can be understood that when the photovoltaic system operates in a normal operation condition, the power grid operates at a rated voltage. It can be further understood that the rated voltage of the power grid varies in different regions, e.g. in some regions the power grid operates at a rated voltage of around 250 V, and in other regions the power grid operates at a rated voltage of around 100 V. Therefore, to maintain the normal operation condition of the photovoltaic system, the inverter can convert a low-voltage DC generated by the photovoltaic module into a corresponding high-voltage AC. However, after the voltage of the power grid in the photovoltaic system drops to a lower voltage or even zero due to accidental factors such as a lightning strike, the inverter can convert the DC generated by the photovoltaic module into a lower reactive DC, to maintain the normal operation of the inverter and the photovoltaic module to avoid grid disconnection, until the voltage of the power grid gradually recovers from the lower voltage to the rated value. It can be understood that the voltage of the power grid in the photovoltaic system is low voltage, and a condition that the inverter and the photovoltaic module keep operating can be referred to as a low voltage ride through (LVRT) condition or a simply LVRT condition.

During recovering of the photovoltaic system from the LVRT condition into a normal operation condition, an inductor current of the transformer in the inverter may rise to a high value, enabling an overcurrent protection of electronic elements such as a switching transistor at a secondary side of the inverter to be triggered, or even causing the electronic elements to be damaged due to an excessive inductor current.

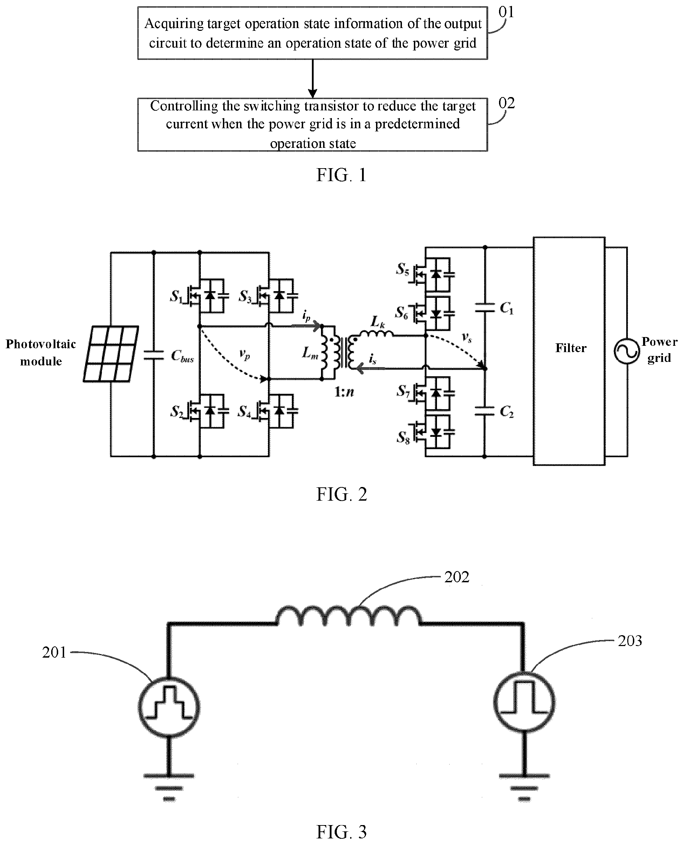

Based on the above problems, referring to FIG. 1, the embodiments of the present disclosure provide a control method for an inverter. The inverter includes a transformer, an input circuit, and an output circuit. Each of the input circuit and the output circuit includes a switching transistor. The transformer is able to output a target current generated by a photovoltaic power generation device through the input circuit to a power grid through the output circuit. The control method includes operations at blocks.

At block 01, target operation state information of the output circuit is acquired to determine an operation state of the power grid.

At block 02, the switching transistor is controlled to reduce the target current when the power grid is in a predetermined operation state. A peak voltage of the power grid is in an upward trend when the power grid is in the predetermined operation state.

The embodiments of the present disclosure provide a control device. The control method of the embodiments of the present disclosure can be implemented by the control device of the embodiments of the present disclosure. In an exemplary embodiment of the present disclosure, the control device includes an acquisition module and a control module. The acquisition module is configured to acquire target operation state information of the output circuit to determine an operation state of the power grid. The control module is configured to, when the power grid is in a predetermined operation state, control the switching transistor to reduce the target current. When the power grid is in the predetermined operation state, a peak voltage of the power grid is in an upward trend.

The embodiments of the present disclosure further provide an inverter including a memory and a processor. A position determination method of the inverter of the embodiments of the present disclosure may be implemented by the inverter of the embodiments of the present disclosure. In an exemplary embodiment of the present disclosure, a computer program is stored in the memory. The processor is configured to acquire target operation state information of the output circuit to determine an operation state of the power grid. The processor is further configured to, when the power grid is in a predetermined operation state, control the switching transistor to reduce the target current. When the power grid is in the predetermined operation state, a peak voltage of the power grid is in an upward trend.

In an exemplary embodiment of the present disclosure, when the inverter in the photovoltaic system normally performs the phase-shifted modulation, the photovoltaic power generation device is normal, and the power grid enters the LVRT condition due to unexpected factors such as the lightning strike, an inductor current corresponding to the transformer may be a relatively high value.

To more clearly explain the embodiments of the present disclosure, please refer to FIG. 2, FIG. 3, and FIG. 4, which are schematic diagrams of application scenarios of some embodiments of the present disclosure.

In the photovoltaic system as shown in FIG. 2, the photovoltaic system includes a photovoltaic module, a micro-inverter, and the power grid. A primary side of the micro-inverter is connected to the photovoltaic module through an H-bridge circuit, and a secondary side of the micro-inverter is connected to the power grid through a bidirectional switch circuit. The primary side and the secondary side are isolated from each other by the transformer. The DC outputted by the photovoltaic module at the primary side is boosted by the transformer to obtain the high-voltage AC which is used to be inputted to the power grid at the secondary side.

*S₅* and *S₆* in the bidirectional switch circuit at the secondary side constitute a bidirectional switch of an upper half bridge arm, and *S₇* and *S₈* constitute a bidirectional switch of a lower half bridge arm. When the voltage of the power grid is greater than zero, *S₅* and *S₇* are used for high-frequency chopping, and *S₆* and *S₈* are directly connected to each other. When the voltage of the power grid is smaller than zero, *S₆* and *S₈* are used for high-frequency chopping, and *S₅* and *S₇* are directly connected to each other.

In addition, in the H-bridge circuit at the primary side and the bidirectional switch circuit at the secondary side, an angle at which *S₄* lags *S₁* can be understood as an internal phase-shifted angle *D₁* between the two bridge arms at the primary side, and an angle at which *S₅* or *S₈* lags *S₁* can be understood as an external phase-shifted angle *D₂* between the bridge arm at the primary side and the bridge arm at the secondary side. Furthermore, based on an adjustment to *D₁* and *D₂*, the DC outputted from the primary side can be converted into the AC inputted from the secondary side.

It should be noted that, under the aforementioned LVRT condition, since a control frequency of *D₁* or *D₂* may be smaller than a switching frequency of the inverter, for example, the control frequency may be 10 kHz and the switching frequency may be 100 kHz, there may be great changes in the voltage of the power grid at two control moments in succession, but *D₁* or *D₂* at the two control moments are not changed, resulting in the inductor current of the inverter being a relatively high value.

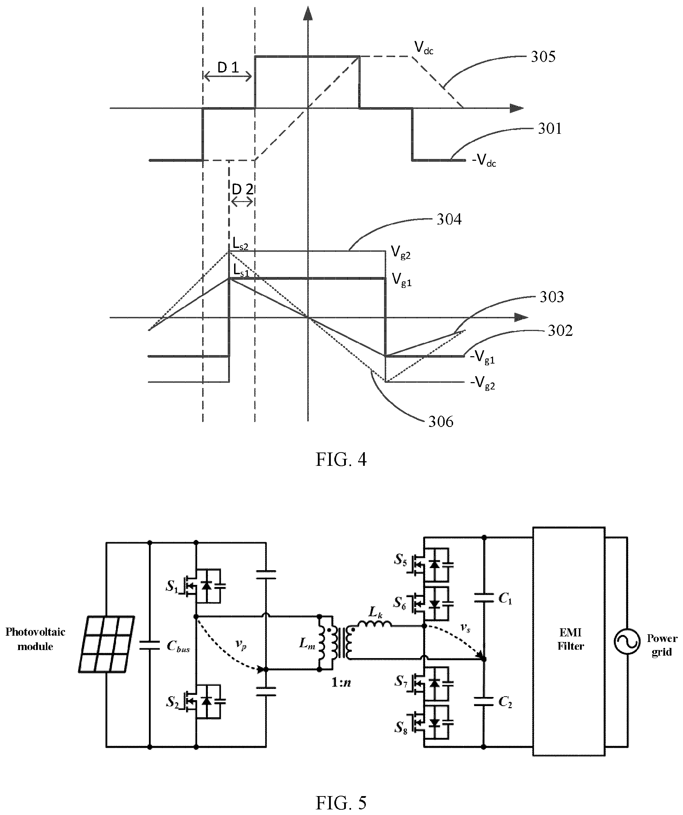

For the sake of clarity, the photovoltaic system shown in FIG. 2 is equivalent to a circuit form shown in FIG. 3. A photovoltaic power generation device 201 is connected to a power grid 203 through an inductor 202 (i.e., a transformer). Further, as shown in FIG. 4, under a normal operation condition, a voltage of the photovoltaic power generation device 201 is shown by a first line segment 301, and the voltage is exchanged between a maximum value V_{dc} and a minimum value -V_{dc}. The voltage of the power grid is shown by a second line segment 302, and the voltage is exchanged between a maximum value V_{g1} and a minimum value -V_{g1}. The secondary-side inductor current may be shown by a third line segment 303.

However, during an LVRT recovery period, within a switching frequency in which the phase-shifted angle remains unchanged, as shown by a fourth curve 304, the maximum value V_{g1} of the voltage of the power grid 202 increases to V_{g2}, and the minimum value -V_{g1} decreases to -V_{g2}. While the voltage of the photovoltaic power generation device 201 is not changed due to the phase-shifted angles *D₁* and *D₂*, the primary-side inductor current of the photovoltaic power generation device 201 acting on the inductor 202 remains unchanged as shown by a fifth line segment 305. Correspondingly, since the voltage of the power grid 202 increases from V_{g1} to V_{g2}, the secondary-side inductor current changes from the third line segment 303 to a sixth line segment 306, that is, from L_{S1} to Lₛ₂. Meanwhile, according to a superposition principle, a current of the inductor 202 increases accordingly, resulting in a problem that the transformer and other elements in the inverter enter into the overcurrent protection or are damaged due to the excessive inductor current during the LVRT period or the LVRT recovery period.

Based on the above background, the embodiments of the present disclosure provide the control method for the inverter. In an exemplary embodiment of the present disclosure, the inverter can determine whether the power grid conforms to a state under the LVRT condition by using the target operation state information when the target operation state information of the output circuit of the transformer is acquired. In response to determining that the power grid is in the predetermined operation state, that is, in response to determining that the peak voltage of the power grid is in an upward trend, and therefore in response to determining that the operation state of the power grid matches the LVRT condition or the LVRT recovery operation condition, the inverter can control the switching transistor in the output circuit and the switching transistor in the input circuit of the transformer, to reduce the inductor current of the transformer. That is, the reduced inductor current is the target current inputted to the transformer by the photovoltaic power generation device through the input circuit and then outputted to the power grid by the transformer through the output circuit.

It can be understood that the inverter of the embodiments of the present disclosure may refer to the aforementioned micro-inverter, or may refer to a centralized inverter, a string inverter, a distributed inverter, etc. A type of inverter can be set based on actual conditions.

It can further be understood that a specific structure of the inverter in the embodiments of the present disclosure, or the input circuit, the output circuit, the transformer, and the switching transistor in the inverter in the embodiments of the present disclosure can be set based on actual conditions. For example, in FIG. 2, a circuit structure (i.e., the H bridge circuit) between the transformer and the photovoltaic module is the input circuit, and a circuit structure (i.e., the bidirectional switch circuit) between the transformer and the power grid is the output circuit. The switching transistor can be *S₁* to *S₈* in FIG. 2. In addition, the target current in the embodiments of the present disclosure may be understood as the inductor current of the transformer.

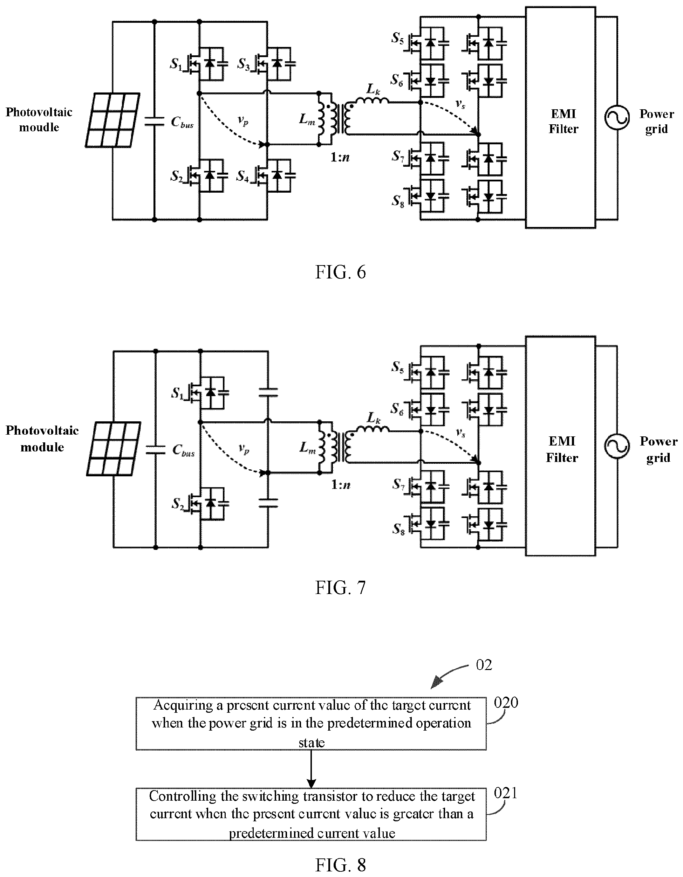

It can be understood that the embodiments of the present disclosure can be applied to inverters of other structures or topologies in addition to the inverter in the scenario shown in FIG. 2. For example, the inverters of other structures are shown in FIG. 5, FIG. 6, and FIG. 7. In an exemplary embodiment of the present disclosure, as shown in FIG. 5, the input circuit of the transformer in the embodiment of the present disclosure may be a half-bridge structure, and the output circuit of the transformer may be a bidirectional switch circuit structure. As shown in FIG. 6, the input circuit in the embodiment of the present disclosure may be an H-bridge structure, and the output circuit may be a full-bridge structure. As shown in FIG. 7, the input circuit in the embodiment of the present disclosure may be a half-bridge circuit structure, and the output circuit may be a full-bridge structure.

The target operation state information of the output circuit can be understood as information capable of characterizing an operation state of each element of the output circuit.

Further, in the case that the power grid is determined to be in the predetermined operation state based on the target operation state information, or in an embodiment, during the period when the photovoltaic system recovers from the LVRT condition to the normal operation condition, the target current or inductor current of the transformer may increase. Therefore, to avoid damage to the electronic elements such as the switching transistor due to an excessive input current of the power grid, the inverter according to the embodiments of the present disclosure can control the switching transistors (*S₁* to *S₈* in FIG. 2) in the input circuit and the output circuit to reduce the target current of the inverter.

It can be understood that a specific method to control the switching transistor may be set based on the actual situation. For example, in some embodiments, in response to determining that the power grid is in the predetermined operation state, the inverter may trigger a current-blocking function according to internal hardware and a pre-programmed firmware program to stop the switching transistor from working, thereby allowing the target current to be zero.

To sum up, the inverter according to the embodiments of the present disclosure can control the switching transistors in the input circuit and the output circuit to reduce the target current of the transformer when the power grid is in the predetermined operation state. For example, in a process that a voltage of the power grid increases from a lower voltage to a rated value, the inverter can control the switching transistors in the input circuit and the output circuit to reduce the target current of the transformer, to ensure a stable operation of the inverter and the photovoltaic system to a certain extent. According to the embodiments of the present disclosure, the operation state of the power grid can be determined based on the acquired target operation state information, allowing the switching transistor to be adjusted at an appropriate timing, and a reliable control of the switching transistor to be guaranteed.

In addition, in some embodiment of the present disclosure, when the power grid is in the predetermined operation state, the peak voltage of the power grid is in an upward trend and the peak voltage of the power grid is smaller than the rated value.

Referring to FIG. 8, in some embodiments of the present disclosure, the block 02 includes operations at blocks.

At block 020, a present current value of the target current is acquired when the power grid is in the predetermined operation state.

At block 021, the switching transistor is controlled to reduce the target current when the present current value is greater than a predetermined current value. The predetermined current value includes a minimum value of the target current when the power grid is in the predetermined operation state.

The control module of the embodiments of the present disclosure is further configured to acquire the present current value of the target current when the power grid is in the predetermined operation state, and to control the switching transistor to reduce the target current when the present current value is greater than the predetermined current value. The predetermined current value includes the minimum value of the target current when the power grid is in the predetermined operation state.

The processor of the embodiments of the present disclosure is further configured to acquire the current value of the target current when the power grid is in the predetermined operation state, and to control the switching transistor to reduce the target current when the present current value is greater than the predetermined current value. The predetermined current value includes the minimum value of the target current when the power grid is in the predetermined operation state.

In an exemplary embodiment of the present disclosure, to ensure the reliable control of the switching transistor, in response to acquiring the present current value of the target current, it may be determined whether the switching transistor needs to be controlled according to a magnitude of the present current value and the predetermined current value.

The predetermined current value is prior knowledge, and is the minimum value of the inductor current or the target current determined in advance through experiments when the power grid is in the LVRT recovery operation condition.

When the present current value of the target current is greater than the predetermined current value, the inverter can control the switching transistors in the input circuit and the output circuit.

In this way, the inverter according to the embodiments of the present disclosure can acquire the present current value of the target current when the power grid is in the predetermined operation state, and control the switching transistor when the present current value of the target current is greater than the predetermined current value, allowing the switching transistor to be controlled at a reasonable timing to a certain extent.

In some embodiments of the present disclosure, the target current includes a present primary-side inductor current of the transformer, and the predetermined current value includes a first current threshold. The first current threshold includes a minimum primary-side inductor current of the transformer when the power grid is in the predetermined operation state. The block 021 includes: controlling the switching transistor to reduce the target current when the present primary-side inductor current is greater than the first current threshold.

The control module of the embodiments of the present disclosure is further configured to control the switching transistor to reduce the target current when the present primary-side inductor current is greater than the first current threshold.

The processor of the embodiments of the present disclosure is further configured to control the switching transistor to reduce the target current when the present primary-side inductor current is greater than the first current threshold.

In an exemplary embodiment of the present disclosure, it may be determined that the element in the inverter may be damaged due to an excessively high target current when the present primary-side inductor current is greater than a predetermined first current threshold, and thus the inverter may control the switching transistors in the input circuit and the output circuit when the present primary-side inductor current is greater than the first current threshold.

The first current threshold is prior knowledge, and is the minimum value of primary-side inductor current determined through experiments in advance when the power grid is in the LVRT recovery operation condition.

In addition, the primary-side inductor current in the embodiments of the present disclosure can be understood as the primary-side input current of the transformer. In one example, the primary-side inductor current is *iₚ* in FIG. 2.

In this way, the inverter according to the embodiments of the present disclosure can acquire the present primary-side inductor current when the power grid is in the predetermined operation state, and control the switching transistor when the present primary-side inductor current is greater than the first current threshold, allowing the switching transistor to be controlled at a reasonable timing to a certain extent.

In some embodiments of the present disclosure, the target current includes a present secondary-side inductor current of the transformer, and the predetermined current value includes a second current threshold. The second current threshold includes a minimum secondary-side inductor current of the transformer when the power grid is in the predetermined operation state. The block 021 includes: controlling the switching transistor to reduce the target current when the present secondary-side inductor current is greater than the second current threshold.

The control module of the embodiments of the present disclosure is further configured to control the switching transistor to reduce the target current when the present secondary-side inductor current is greater than the second current threshold.

The processor of the embodiments of the present disclosure is further configured to control the switching transistor to reduce the target current when the present secondary-side inductor current is greater than the second current threshold.

In an exemplary embodiment of the present disclosure, it may be determined that the element in the inverter may be damaged due to an excessively high target current when the present secondary-side inductor current is greater than a predetermined second current threshold, and thus the inverter may control the switching transistors in the input circuit and the output circuit when the present secondary-side inductor current is greater than the second current threshold.

The second current threshold is prior knowledge, and is the minimum value of secondary-side inductor current determined through experiments in advance when the power grid is in the LVRT recovery operation condition.

In addition, the secondary-side inductor current in the embodiments of the present disclosure can be understood as the secondary-side input current of the transformer. In one example, the secondary-side inductor current is *iₛ* in FIG. 2.

In this way, the inverter according to the embodiments of the present disclosure can acquire the present secondary-side inductor current when the power grid is in the predetermined operation state, and control the switching transistor when the present secondary-side inductor current is greater than the second current threshold, allowing the switching transistor to be controlled at a reasonable timing to a certain extent.

In some embodiments of the present disclosure, the block 021 includes: controlling the switching transistor to switch to an off state to reduce the target current when the present current value is greater than the predetermined current value.

The control module of the embodiments of the present disclosure is further configured to control the switching transistor to switch to the off state to reduce the target current when the present current value is greater than the predetermined current value.

The processor of the embodiments of the present disclosure is further configured to control the switching transistor to switch to the off state to reduce the target current when the present current value is greater than the predetermined current value.

In an exemplary embodiment of the present disclosure, to avoid damage to the element in the inverter or triggering of overcurrent protection due to an excessively high inductor current or excessively high target current, all switching transistors in the input circuit and the output circuit can be controlled to be in the off state in response to determining that the present current value of the target current is greater than the predetermined current value.

It should be noted that when all switching transistors in the input circuit and the output circuit are in the off state, the inverter can be considered to be in a current-blocking mode. Therefore, each of a current of a primary winding and a current of a secondary winding of the transformer can be zero, or each of the primary-side inductor current and the secondary-side inductor current can be zero, thereby reducing the target current.

In this way, the inverter according to the embodiments of the present disclosure can control the switching transistors in the input circuit and the output circuit to switch to the off state when the present current value of the target current is greater than the predetermined current value, to make the inverter itself block the current, thereby reducing the target current.

In some embodiments of the present disclosure, the switching transistor is configurable to generate a phase-shifted modulation signal. The block 021 includes: controlling the switching transistor to switch to an on state when a duration of the switching transistor in the off state satisfies a predetermined duration, and controlling, based on output end information, the phase-shifted modulation signal generated by the switching transistor to reduce the target current.

The control module of the embodiments of the present disclosure is further configured to control the switching transistor to switch to the on state when the duration of the switching transistor in the off state satisfies the predetermined duration, and control, based on output end information, the phase-shifted modulation signal generated by the switching transistor to reduce the target current.

The processor of the embodiments of the present disclosure is further configured to control the switching transistor to switch to the on state when the duration of the switching transistor in the off state satisfies the predetermined duration, and control, based on output end information, the phase-shifted modulation signal generated by the switching transistor to reduce the target current.

In an exemplary embodiment of the present disclosure, to avoid disconnection of the inverter from the power grid, or in other words, to avoid off-gird of the inverter, the inverter can control each switching transistor in the input circuit and the output circuit to switch to the on state when each switching transistor in the input circuit and the output circuit is in the off state for a certain time, to allow the switching transistor to operate normally. When each switching transistor is in the on state, the inverter of the embodiments of the present disclosure can control the on and off of each switching transistor to realize the phase-shifted modulation.

Therefore, the inverter can control each switching transistor to generate a corresponding phase-shifted modulation signal, to allow the target current to be reduced due to the phase-shifted modulation signal.

In some embodiments of the present disclosure, the inverter can acquire voltages on two sides of the power grid and voltages on two sides of the photovoltaic power generation device to control each switching transistor to generate the phase-shifted modulation signal.

In this way, the inverter according to the embodiments of the present disclosure can control the switching transistor to switch to the on state when the duration of the switching transistor in the off state satisfies the predetermined duration, and then perform phase-shifted modulation through the switching transistor in the on state to generate the phase-shifted modulation signal. Therefore, the target current can be reduced based on the phase-shifted modulation signal, thereby ensuring that the inverter is not disconnected from the power grid when the power grid is in the predetermined state, and the robustness of the inverter is guaranteed.

In some embodiments of the present disclosure, the block 021 includes: acquiring the present current value of the target current when the power grid is in the predetermined operation state and the switching transistor is in the on state.

The control module of the embodiments of the present disclosure is further configured to acquire the present current value of the target current when the power grid is in the predetermined operation state and the switching transistor is in the on state.

The processor of the embodiments of the present disclosure is further configured to acquire the present current value of the target current when the power grid is in the predetermined operation state and the switching transistor is in the on state.

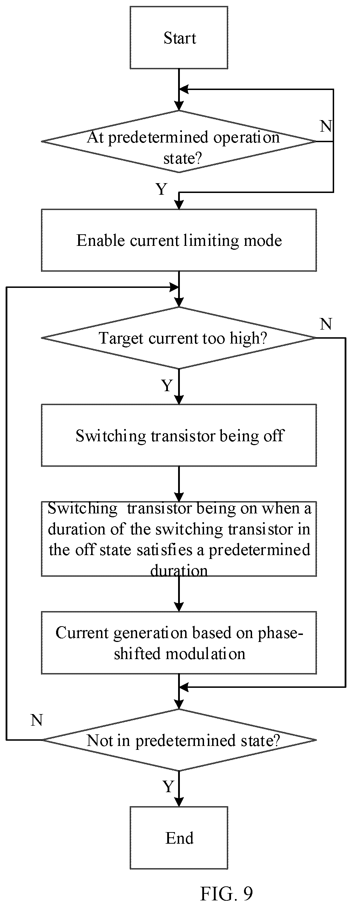

To more clearly illustrate the embodiments of the present disclosure, please refer to FIG. 9, which is a flowchart of a control method in some embodiments of the present disclosure.

That is, as shown in FIG. 9, when the inverter determines that the power grid is in the predetermined state, the present current value of the target current can be acquired to determine whether the present current value is greater than the predetermined current value.

If the present current value is greater than the predetermined current value, the inverter can control each switching transistor in the input circuit and the output circuit to be in the off state to block the current.

When a duration of the switching transistor in the off state satisfies the predetermined duration, the inverter can control each switching transistor in the input circuit and the output circuit to be in the on state to release the current-blocking, and further perform the phase-shifted modulation to generate the current.

After the phase-shifted modulation is completed, the inverter may determine whether a present state of the power grid is the predetermined state. If the present state of the power grid is the predetermined state, the present current value of the target current is acquired again to determine whether the present current value is greater than the predetermined current value. If the present state of the power grid is not the predetermined state, the process ends.

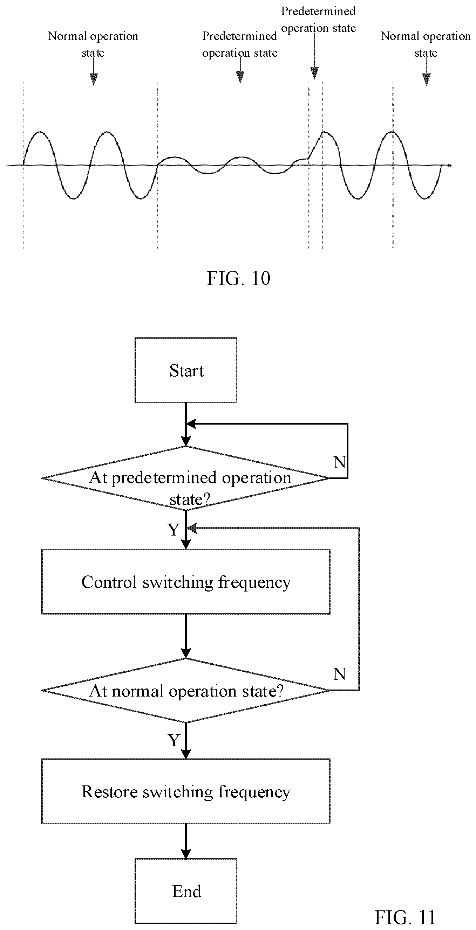

In some embodiments of the present disclosure, the inverter may make the inductor current or the target current change as shown in FIG. 10 through the control method shown in FIG. 9. FIG. 10 is a schematic diagram of an application scenario in some embodiments of the present disclosure.

In this way, the inverter according to the embodiments of the present disclosure can acquire the present current value of the target current when the power grid is in the predetermined operation state and the switching transistor is in the on state. Therefore, whether the switching transistor can be switched to the off state can be determined, a possibility that overcurrent protection is triggered or even damage due to an excessive target current when the switching transistor is in the on state is reduced to a certain extent, and a safe operation of the switching transistor is guaranteed.

In some embodiments of the present disclosure, the block 021 includes: increasing a switching frequency of the switching transistor to reduce the target current when the power grid is in the predetermined operation state. The switching frequency and the target current have a negative correlation.

The control module of the embodiments of the present disclosure is further configured to increase the switching frequency of the switching transistor to reduce the target current when the power grid is in the predetermined operation state. The switching frequency and the target current have a negative correlation.

The processor of the embodiments of the present disclosure is further configured to increase the switching frequency of the switching transistor to reduce the target current when the power grid is in the predetermined operation state. The switching frequency and the target current have a negative correlation.

In an exemplary embodiment of the present disclosure, based on the prior knowledge, in response to determining that the switching frequency and the target current have a negative correlation, the inverter can reduce the target current by increasing the switching frequency of the switching transistor.

In some embodiments of the present disclosure, increasing the switching frequency of the switching transistor can be seen in the following formula: ${f}_{s} = \frac{{u}_{g} - {u}_{dc}}{2 {i}_{L}} ,$ where *fₛ* represents the switching frequency of the inverter, *i_{L}* represents the predetermined current value, *u_{g}* represents a value of an output voltage converted to the primary side by the transformer turn ratio, and *u_{dc}* represents an input voltage.

It can be understood that the input voltage in the embodiments of the present disclosure may be a voltage on two sides of the photovoltaic module (corresponding to the photovoltaic power generation device) in FIG. 2 and FIG. 5 to FIG. 7, or a voltage on two sides of a capacitor *C_{bus}*, or a voltage *vₚ* in FIG. 2 and FIG. 5 to FIG. 7.

Correspondingly, the output voltage in the embodiments of the present disclosure may be a voltage on two sides of the power grid in FIG. 2 and FIG. 5 to FIG. 7, or a voltage on two sides of a capacitor *C₁* and/or a capacitor *C₂*, or a voltage *vₛ* in FIG. 2 and FIG. 5 to FIG. 7.

When the output voltage is the voltage on two sides of the power grid, the inverter can acquire the output voltage by acquiring an instantaneous voltage value on two sides of the power grid, or acquire the output voltage by acquiring a highest value that a fundamental voltage of the power grid can reach in one cycle.

In addition, when the output voltage is the voltage on two sides of the capacitor *C₁* or the capacitor *C₂*, the voltage on two sides of the capacitor *C₁* or the capacitor *C₂* may be multiplied by 2, i.e., a double value of the voltage on two sides of the capacitor *C₁* or the capacitor *C₂* may be taken as the output voltage to be substituted into the above formula.

Correspondingly, when the output voltage is the voltage on two sides of the capacitor *C₁* and the capacitor *C₂*, the voltage on two sides of the capacitors *C₁* and *C₂* can directly be substituted into the above formula.

It is understood that after acquiring a target value of the switching frequency by the above formula, the inverter can increase the present value of the switching frequency to the target value, thereby reducing the target current to the predetermined current value. It is understood that the predetermined current value includes a maximum value of the target current when the power grid is not in the predetermined operation state.

In some embodiments of the present disclosure, specific reference can be made to FIG. 11, which is a schematic flowchart of a control method in some embodiments of the present disclosure. That is, the inverter of the embodiments of the present disclosure can control or increase the switching frequency of the switching transistor in response to detecting that the power grid is in the predetermined state, to reduce the target current. After completing the control of the switching frequency, the inverter can detect whether the power grid is in the normal operation state. If the power grid is in the normal operation state, the switching frequency is restored to a situation before the power grid is in the predetermined operation state, and otherwise the switching frequency is controlled based on the actual situation.

In some embodiments of the present disclosure, the inverter can increase the switching frequency to reduce the target current, allowing the target current to vary as shown in FIG. 10.

In this way, the embodiments of the present disclosure can reduce the target current by increasing the switching frequency, allowing the target current to be reliably reduced.

In some embodiments of the present disclosure, the block 021 includes: controlling the switching transistor to switch to an off state to reduce the target current when the power grid is in the predetermined operation state.

The control module of the embodiments of the present disclosure is further configured to control the switching transistor to switch to the off state to reduce the target current when the power grid is in the predetermined operation state.

The processor of the embodiments of the present disclosure is further configured to control the switching transistor to switch to the off state to reduce the target current when the power grid is in the predetermined operation state.

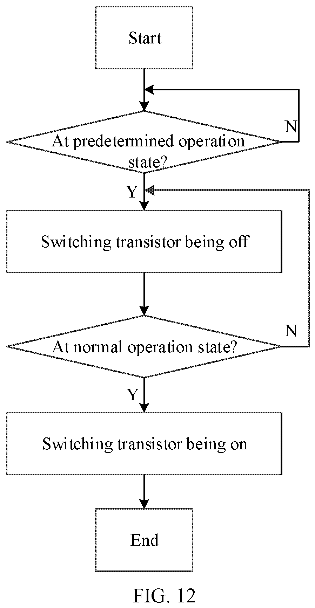

To more clearly illustrate the embodiments of the present disclosure, please refer to FIG. 12, which is a flowchart of a control method in some embodiments of the present disclosure. That is, to avoid damage to or overcurrent protection of the element in the inverter, in the embodiments of the present disclosure, each switching transistor in the input circuit and the output circuit can be controlled to switch to the off state in response to determining that the power grid is in the predetermined operation state, to realize the current-blocking of the inverter, thereby reducing the target current.

Each switching transistor in the input circuit and the output circuit is controlled to switch to the on state to release the current-blocking of the inverter in response to determining that the power grid is in the predetermined operation state.

In some embodiments of the present disclosure, the inverter can control the switching transistor to switch to the off state when the power grid is in the predetermined operation state, and control the switching transistor to switch to the on state when the power grid is in the normal operation state, allowing the target current to change as shown in FIG. 10.

In this way, the inverter according to the embodiments of the present disclosure can control the switching transistor to switch to the off state when the power grid is in the predetermined operation state, allowing the target current to be reliably reduced.

In some embodiments of the present disclosure, the target operation state information includes a target voltage of the output circuit. The method further includes: determining that the power grid is in the predetermined operation state when a present voltage value of the target voltage is smaller than a predetermined voltage value and the target voltage is in an upward trend within a predetermined duration. The predetermined voltage value includes a lowest value of the target voltage when the power grid is in the predetermined operation state.

The control device according to the embodiments of the present disclosure further includes a determination module. The determination module is configured to determine that the power grid is in the predetermined operation state when the present voltage value of the target voltage is smaller than the predetermined voltage value and the target voltage has an upward trend within the predetermined duration. The predetermined voltage value includes the lowest value of the target voltage when the power grid is in the predetermined operation state.

The processor of the embodiments of the present disclosure is further configured to determine that the power grid is in the predetermined operation state when the present voltage value of the target voltage is smaller than the predetermined voltage value and the target voltage has an upward trend within the predetermined duration. The predetermined voltage value includes the lowest value of the target voltage when the power grid is in the predetermined operation state.

For a clearer description of the embodiments of the present disclosure, please refer to FIG. 2 and FIG. 5 to FIG. 7. That is, the target voltage in the embodiments of the present disclosure may be the voltage on two sides of the power grid, or the voltage on two sides of the capacitor *C₁* and/or the capacitor *C₂*, or may be the voltage *vₛ*.

Therefore, in the embodiments of the present disclosure, it can be determined that the power grid is in the predetermined operation state when the target voltage is smaller than the predetermined voltage value and in response to determining that the target voltage continuously rises within a period of time. The predetermined voltage value may include the rated voltage of the power grid.

It can be understood that when the target voltage is the voltage on the two sides of the capacitor *C₁* or the capacitor *C₂* described above, the predetermined voltage value may be half of the rated voltage of the power grid.

In this way, according to the embodiments of the present disclosure, the operation state of the power grid can be determined based on the target voltage and the predetermined voltage value, allowing reliable determination of the predetermined operation state of the power grid to be guaranteed to a certain extent.

In some embodiments of the present disclosure, the inverter can determine whether the power grid is the predetermined operation state by a voltage on a power generation side. Taking FIG. 2 and FIG. 5 to FIG. 7 as examples, the voltage on the power generation side may be the voltage on two sides of the photovoltaic module (corresponding to the photovoltaic power generation device), or the voltage on two sides of the capacitor *C_{bus}*, or the voltage *vₚ* in FIG. 2 and FIG. 5 to FIG. 7. Furthermore, when the voltage on the power generation side is greater than the predetermined value, the inverter may regard the present operation state of the power grid as the predetermined operation state.

The embodiments of the present disclosure further provide a photovoltaic system including the inverter described above.

The embodiments of the present disclosure further provide a computer-readable storage medium having a computer program stored thereon. One or more processors, when executing the computer program, implement the control method described above.

In the description of this specification, descriptions with reference to the terms "specially", "further", "particularly", "understandably" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. Furthermore, different embodiments or examples and features of different embodiments or examples described in this specification may be combined by one skilled in the art without contradiction.

Any process or method described in a flowchart or described herein in other ways may be understood to include one or more modules, segments, or portions of codes of executable instructions for achieving specific logical functions or process. The scope of a preferred embodiment of the present disclosure includes other implementations. A function may be performed not in a sequence shown or discussed, including a substantially simultaneous manner or a reverse sequence based on the function involved, which should be understood by those skilled in the art to which the embodiments of the present disclosure belong.

Although embodiments of the present disclosure have been shown and described above, it is to be understood that the above embodiments are exemplary and are not to be construed as limiting the present disclosure, and that variations, modifications, substitutions, and variations may be made to the above embodiments by those skilled in the art within the scope of the present disclosure.

## Claims

1. A control method for an inverter, wherein the inverter comprises a transformer, an input circuit, and an output circuit, each of the input circuit and the output circuit comprising a switching transistor, and the transformer being able to output a target current inputted by a photovoltaic power generation device through the input circuit to a power grid through the output circuit, and wherein the method comprises:
acquiring target operation state information of the output circuit to determine an operation state of the power grid; and
controlling the switching transistor to reduce the target current when the power grid is in a predetermined operation state, wherein a peak voltage of the power grid is in an upward trend when the power grid is in the predetermined operation state.

2. The method according to claim 1, wherein controlling the switching transistor to reduce the target current when the power grid is in the predetermined operation state comprises:
acquiring a present current value of the target current when the power grid is in the predetermined operation state; and
controlling the switching transistor to reduce the target current when the present current value is greater than a predetermined current value, wherein the predetermined current value comprises a minimum value of the target current when the power grid is in the predetermined operation state.

3. The method according to claim 2, wherein:
the target current comprises a present primary-side inductor current of the transformer, and the predetermined current value comprises a first current threshold, the first current threshold comprising a minimum primary-side inductor current of the transformer when the power grid is in the predetermined operation state; and
controlling the switching transistor to reduce the target current when the present current value is greater than the predetermined current value comprises:
controlling the switching transistor to reduce the target current when the present primary-side inductor current is greater than the first current threshold.

4. The method according to claim 2, wherein:
the target current comprises a present secondary-side inductor current of the transformer, and the predetermined current value comprises a second current threshold, the second current threshold comprising a minimum secondary-side inductor current of the transformer when the power grid is in the predetermined operation state; and
controlling the switching transistor to reduce the target current when the present current value is greater than the predetermined current value comprises:
controlling the switching transistor to reduce the target current when the present secondary-side inductor current is greater than the second current threshold.

5. The method according to claim 2, wherein controlling the switching transistor to reduce the target current when the present current value is greater than the predetermined current value comprises:
controlling the switching transistor to switch to an off state to reduce the target current when the present current value is greater than the predetermined current value.

6. The method according to claim 5, wherein:
the switching transistor is configurable to generate a phase-shifted modulation signal; and
controlling the switching transistor to reduce the target current when the power grid is in the predetermined operation state comprises:
controlling the switching transistor to switch to an on state when a duration of the switching transistor in the off state satisfies a predetermined duration, and controlling, based on output end information, the phase-shifted modulation signal generated by the switching transistor to reduce the target current.

7. The method according to claim 6, wherein acquiring the present current value of the target current when the power grid is in the predetermined operation state comprises:
acquiring the present current value of the target current when the power grid is in the predetermined operation state and the switching transistor is in the on state.

8. The method according to claim 1, wherein controlling the switching transistor to reduce the target current when the power grid is in the predetermined operation state comprises:
increasing a switching frequency of the switching transistor to reduce the target current when the power grid is in the predetermined operation state, wherein the switching frequency and the target current have a negative correlation.

9. The method according to claim 1, wherein controlling the switching transistor to reduce the target current when the power grid is in the predetermined operation state comprises:
controlling the switching transistor to switch to an off state to reduce the target current when the power grid is in the predetermined operation state.

10. The method according to claim 1, wherein:
the target operation state information comprises a target voltage of the output circuit; and
the method further comprises:
determining that the power grid is in the predetermined operation state when a present voltage value of the target voltage is smaller than a predetermined voltage value and the target voltage is in an upward trend within a predetermined duration, wherein the predetermined voltage value comprises a lowest value of the target voltage when the power grid is in the predetermined operation state.

11. An inverter, comprising:
a memory having a computer program stored thereon; and
a processor, wherein the processor, when executing the computer program, implements the method according to any one of claims 1 to 10.

12. A photovoltaic system, comprising the inverter according to claim 11.
